# EUROPEAN PATENT SPECIFICATION

(11) **EP 0 708 153 B1**
(45) Date of publication and mention of the grant of the patent: **25.07.2001**
(21) Application number: 94307626.5
(22) Date of filing: 18.10.1994
(51) Int. Cl.: C09B 67/08, B41M 5/28, B41M 5/30

(54) **Temperature-sensitive color-memorizing microcapsulated pigment**
Temperaturempfindliches, farbspeicherndes, mikroverkapseltes Pigment
Pigment microencapsulé thermosensible mémorisant la couleur

(43) Date of publication of application: 24.04.1996
(73) Proprietor: THE PILOT INK CO., LTD., Nagoya-shi, Aichi-ken (JP)
(72) Inventor: Senga, Kuniyuki, Kasugai-shi, Aichi-ken (JP); Kito, Tsutomu, Tajimi-shi, Gifu-ken (JP)
(74) Representative: West, Alan Harry

(56) References cited:
- FR-A- 2 538 309
- FR-A- 2 591 534
- DATABASE WPI Week 8442, Derwent Publications Ltd., London, GB; AN 84-259405[42] 'Material having colour change on heating.' & JP-A-59 156 790 (PILOT INK KK) 6 September 1984
- DATABASE WPI Week 8607, Derwent Publications Ltd., London, GB; AN 86-045677[07] 'Reversible heat-sensitive recording material composition.' & JP-A-60 264 285 (PILOT PEN COMP.) 27 December 1985

## Description

The present invention relates to temperature-sensitive color-memorizing microcapsulated pigments and, more specifically, to temperature-sensitive color-memorizing microcapsulated pigments which exhibit a wide hysteresis range of coloring/decoloring alternately and reversibly caused by temperature changes, which remain in the colored/decolored state at ambient temperatures without being continuously exposed to high/low temperatures required for causing the colored/decolored state, and which exhibit a color change sharpness.

A widely-used, typical reversible thermochromatic material exhibiting thermochromatism at a certain color-change temperature can be, at ambient temperatures, in one of its two states, that is, in the state maintained at ambient temperature. The other state cannot be maintained unless the material is continuously exposed to a temperature beyond the color-change temperature when that temperature is higher than ambient, or to a temperature below the color-change temperature when that temperature is lower than ambient The temperature-sensitive color-memorizing material described in GB-A-2 184 250, however, can selectively maintain, at ambient temperatures, both of its two states obtained at temperatures higher/lower than the color-change temperature. By heating and cooling the material the two states can be alternately selected to be maintained at ambient temperatures. As a result, the temperature-sensitive color-memorizing material has been applied to various kinds of fields such as temperature-sensitive recording materials, toys, ornaments and printing materials.

The reversible heat-sensitive recording composition of GB-A-2184250 comprises (A) a selected electron donating chromatic organic compound, (B) a selected developer compound and (C) an ester selected from certain classes of ester having a ΔT value [melting point - cloud point] in the range of 5 to 50°C. A recording on the material can be erased at a specific temperature so that coloring or decoloring can be controlled to occur at a desired temperature range. This range (the hysteresis value of the composition) is pre-determined by the ΔT value of the ester compound. The color-memorizing effect consists in thermochromism obtained only by systems having, as a constituent, compound(s) selected from a specific group of esters. In other words, the ester to be employed in the material cannot be freely chosen and the application of the temperature-sensitive color-memorizing material is limited.

Reversible heat-sensitive recording materials which exhibit similar characteristics are described in GB-A-2135466. Such a material comprises a sheet substrate having coated on the surface thereof a coating composition containing, as a chromogenic component, a heat-discoloring material comprising a homogeneous fused mixture of (A) an electron-donating chromatic organic compound; (B) a phenolic carboxylic acid or similar compound reactive with (A) to cause reversible coloring; and (C) a component for controlling the temperature and heat-sensitivity of the reaction between components (A) and (B). (A), (B) and (C) are present in a ratio of 1:0.1 to 50:1 to 800 by weight. The heat-discoloring material exhibits a coloring-color eliminating hysteresis character with a temperature width broader than 3°C and can form a positive or negative image by the application of local cooling or heating. The image formed can be stably maintained within a specific temperature range and easily erased, so that the material can be repeatedly re-used to form additional images.

The present invention seeks to provide a temperature-sensitive color-memorizing microcapsulated pigment capable of a wide range of applications by using compounds which function as reaction media for exhibiting the color-memorizing effect and which can be selected more easily, and which exhibit a high degree of color change sharpness.

The present invention is based on the finding that a system employing, as the reaction medium, one or more specific aliphatic acid/alcohol esters obtained from a specific group of monohydric aliphatic alcohols having odd numbers of carbon atoms and a group of aliphatic carboxylic acids having even numbers of carbon atoms, exhibits thermochromism characteristics having wide hysteresis ranges (ΔH) and excellent color memorizing effects, and sharp color change characteristics.

A temperature-sensitive color-memorizing microcapsulated pigment composition according to the present invention is a homogenous compatible combination of (A) an electron-donating chromatic organic compound, (B) an electron-accepting compound, and (C) one or more esters employed to control color forming reactions. The esters are selected to realize the characteristics of reversible color change of the temperature-sensitive color-memorizing material having a wide hysteresis range (ΔH) with respect to color densities and temperatures from 8 to 30°C, and a color change sharpness defined as the difference (Δt) between the lowest temperature at which complete decoloration occurs and the highest temperature at which complete coloration can be maintained, of 1 to 10°C.

The ester(s) are selected from (1) aliphatic acid/alcohol esters obtained from monohydric aliphatic alcohols having odd numbers (not less than 9) of carbon atoms and aliphatic carboxylic acids having even numbers of carbon atoms and (2) aliphatic acid/alcohol esters having 17 to 23 carbon atoms obtained from aliphatic carboxylic acids having an even number (10 to 16 or 12 to 18) of carbon atoms and either n-pentyl alcohol or n-heptyl alcohol.

Further, the aliphatic acid alcohol esters may be selected from those having 17 to 37 carbon atoms obtained from n-nonyl alcohol, n-undecyl alcohol, n-tridecyl alcohol or n-pentadecyl alcohol.

The accompanying drawing illustrates graphically the relationship between color density and temperature indicating the hysteresis characteristic of the temperature-sensitive color-memorizing microcapsulated pigment according to the present invention.

In the drawing with the ordinate representing color density and the abscissa representing temperature, the color density changes as the temperature changes as is indicated by the arrows. Point A indicates the color density at a temperature T₄, the lowest temperature which can cause a completely decolored state (hereinafter referred as coloring/decoloring threshold temperature). Point B indicates the color density at a temperature T₃, the highest temperature at which a completely colored state can be maintained (hereinafter referred as highest color-maintaining temperature). Point C indicates the color density at a temperature T₂, the lowest temperature at which a completely decolored state can be maintained (hereinafter referred as lowest decoloring maintaining temperature). And point D indicates the color density at a temperature T₁, the highest temperature which can cause a completely colored state (hereinafter referred as coloring-completing temperature). At temperature T_{A}, both of two phases, that is, the colored state indicated by point E and the decolored state indicated by point F, can be obtained. As is clearly understood, within a temperature range, including the temperature T_{A}, in which the colored state and the decolored state are compatible with each other, the colored or decolored state can be maintained. The length of the segment EF corresponds to the contrast of coloring/decoloring. And the length of the segment HG intersecting the middle point of the segment EF corresponds to the range of the hysteresis with respect to temperatures (hereinafter referred to as hysteresis range ΔH). The greater the hysteresis range ΔH, the easier the colored and decolored states can be maintained. According to the experiments carried out by the present inventors, the colored and decolored states can be practically maintained if ΔH is within the range from 8°C to 30°C. The difference Δt between the coloring/decoloring threshold temperature T₄ and the highest color-maintaining temperature T₃ corresponds to the sharpness of the color change; Δt is from 1°C to 10°C to be effective for practical use.

In addition, the temperature range from T₃ to T₂, including T_{A}, within which both the colored state and the decolored state can be substantially maintained should be from 8°C to 30°C to be effective for practical use.

The relative amounts of the three components of the pigment compositions of the invention are determined according to desired color densities, color-change temperatures, color change behavior and the types of respective components employed. In general, however, 0.1 to 50 parts of the component (B), more preferably 0.5 to 20 parts thereof, is employed against 1 part of the component (A) in order to obtain desirable properties. Similarly, 1 to 800 parts of the component (C), more preferably 5 to 200 parts thereof, is employed. Parts are by weight.

Each component may be a mixture of two or more materials. Thus, so long as the characteristics of the pigment composition are not hindered, anti-oxidants, ultraviolet light absorbents, infrared absorbents, dissolving assistants, and so on may be added.

In addition, ordinary non-thermochromic pigments may be added so that the color change can occur from one color [1] to another [2] instead of coloring/decoloring.

Component (A), that is, the electron-donating chromatic organic compound may be selected from conventionally known compounds consisting of diphenyl methane phthalides, fluorans, diphenyl methan azaphthalides, indolyl phthalides, phenyl indolyl phthalides, phenyl indolyl azaphthalides and styrinoquinolines.

Examples of this group are as follows:
3,3-bis(p-dimethylaminophenyl)-6-dimethylaminophthalide, 3-(4-diethylaminophenyl)-3-(1-ethyl-2-methylindol-3-yl)phthalide, 3-(4-diethylamino-2-ethoxyphenyl)-3-(1-ethyl-2-methylindol-3-yl)-4-azaphthalide, 1,3-dimethyl-6-diethylaminofluoran, 2-chloro-3-methyl-6-dimethylaminofluoran, 3-dibutylamino-6-methyl-7-anilinofluoran, 3-diethylamino-6-methyl-7-anilinofluoran, 3-diethylamino-6-methyl-7-xylidinofluoran, 2-(2-chloroanilino)-6-dibutylaminofluoran, 3,6-dimethoxyfluoran, 3,6-di-n-butoxyfluoran, 1,2-benz-6-diethylaminofluoran, 1-2-benz-6-dibutylaminofluoran, 1,2-benz-6-ethylisoamylaminofluoran, 2-methyl-6-(N-p-tolyl-N-ethylamino)fluoran, 2-(N-phenyl-N-methylamino)-6-(N-p-tolyl-N-etylamino)fluoran, 2-(3'-trifluoromethylanilino)-6-diethylaminofluoran, 3-chloro-6-cyclohexylaminofluoran, 2-methyl-6-cyclohexylaminofluoran and 3-methoxy-4-dodecoxystylinoquinoline.

Component (B), that is, the electron-accepting compound may be selected from compounds having active proton(s), pseudo-acidic compounds (which are not real acids but act as acids in the compositions to develop the color of the component (A)) and compounds having electron hole(s).

The compounds having active proton(s) include: monophenol and/or polyphenol groups, as compounds having phenolic hydroxyl group(s), that is, compounds having monohydric and/or polyhydric phenolic hydroxyl group(s) and optionally having substituent(s) selected from alkyl groups, aryl groups, acyl groups, alkoxy carbonyl groups, carboxy groups, esters thereof, amide groups and halogen atoms; phenols having two or three identical substituents, such as bis or tris phenols; phenol-aldehyde condensation resins; and metal salts of the above compounds having phenolic hydroxyl group (s).

Examples of the electron-accepting component (B) are as follows:
phenol, o-cresol, tert-butylcatechol, nonylphenol, n-octylphenol, n-dodecylphenol, n-stearylphenol, p-chlorophenol, p-bromophenol, o-phenylphenol, p-hydroxy-n-butyl benzoate, p-hydroxy-n-octylbenzoate, resorcin, dodecyl gallate, 2,2-bis(4'-hydroxyphenyl) propane, 4,4-dihydroxydiphenyl sulfone, 1,1-bis(4'-hydroxyphenyl)ethane, 2,2-bis(4'-hydroxy-3-methylphenyl)propane, bis(4-hydroxyphenyl)sulfide, 1-phenyl-1,1-bis(4'-hydroxyphenyl)ethane, 1,1-bis(4'-hydroxyphenyl)-3-methylbutane, 1,1-bis(4'-hydroxyphenyl)-2-methylpropane, 1,1-bis(4'-hydroxyphenyl)n-hexane, 1,1-bis(4'-hydroxyphenyl)n-heptane, 1,1-bis(4'-hydroxyphenyl)n-octane, 1,1-bis(4'-hydroxyphenyl)n-nonane, 1,1-bis(4'-hydroxyphenyl)n-decane, 1,1-bis(4'-hydroxyphenyl)n-dodecane, 2,2-bis(4'-hydroxyphenyl)butane, 2,2-bis(4'-hydroxyphenyl)ethyl propionate, 2,2-bis(4'-hydroxyphenyl)-4-methylpentane, 2,2-bis(4'-hydroxyphenyl)hexafluoropropane, 2,2-bis(4'-hydroxyphenyl)n-heptane and 2,2-bis(4'-hydroxyphenyl)n-nonane.

Although the above-mentioned compounds having phenolic hydroxyl group(s) can exhibit the most effective thermochromism characteristics, the component (B) may be selected from aromatic carboxylic acids, aliphatic carboxylic acids having 2 to 5 carbon atoms, metal salts of carboxylic acids, acidic phosphates and metal salts thereof, 1,2,3-triazol and derivatives thereof.

Examples of the component (C), the esters, are as follows:
n-pentadecyl acetate, n-tridecyl butylate, n-pentadecyl butylate, n-undecyl caproate, n-tridecyl caproate, n-pentadecyl caproate, n-nonyl caprylate, n-undecyl caprylate, n-tridecyl caprylate, n-pentadecyl caprylate, n-heptyl caprate, n-nonyl caprate, n-undecyl caprate, n-tridecyl caprate, n-pentadecyl caprate, n-pentyl laurate, n-heptyl laurate, n-nonyl laurate, n-undecyl laurate, n-tridecyl laurate, n-pentadecyl laurate, n-pentyl myristate, n-heptyl myristate, n-nonyl myristate, n-undecyl myristate, n-tridecyl myristate, n-pentadecyl myristate, n-pentyl palmitate, n-heptyl palmitate, n-nonyl palmitate, n-undecyl palmitate, n-tridecyl palmitate, n-pentadecyl palmitate, n-nonyl stearate, n-undecyl stearate, n-tridecyl stearate, n-pentadecyl stearate, n-nonyl eicosanoate, n-undecyl eicosanoate, n-tridecyl eicosanoate, n-pentadecyl eicosanoate, n-nonyl behenate, n-undecyl behenate, n-tridecyl behenate and n-pentadecyl behenate.

As long as the hysteresis characteristics are not greatly affected, component (C) selected from the above-mentioned esters may, if desirable, also contain other kinds of esters, alcohols, carboxylic acids, ketones or amides. In this case, preferably 20 parts of additive(s) or less can be added against 100 parts of the component (C) (by weight) in order to obtain desired excellent color-memorizing effect.

The three indispensable components (A), (B) and (C) in the homogeneous compatible composition are occluded or enclosed into microcapsules according to known encapsulation techniques. By micro-granulation (0.5 to 50 µm, more preferably 1 to 30 µm) a wider hysteresis range ΔH can be obtained. As the components are protected in the capsule membranes, their properties are not degraded upon contact with chemically active substances such as acidic substances, alkaline substances and peroxides, or with other kinds of solvent components. At the same time, thermal resistance can be obtained.

Examples of available encapsulation techniques are interfacial polymerization, in situ polymerization, in-liquid curing coating, phase separation from an aqueous solution, phase separation from an organic solvent, in-gas suspending coating and spray drying, which are properly selected depending on the intended use. The surfaces of microcapsules, if preferable in practical use, may be coated with an additional resin membrane to improve stability and/or surface characteristics.

According to the invention, one or more specific aliphatic acid/alcohol esters obtained by esterification of monohydric aliphatic alcohols having odd numbers of carbon atoms and aliphatic carboxylic acids having even numbers of carbon atoms are employed in the compositions as reaction media.

The resultant compositions exhibits thermochromism with a wide hysteresis range ΔH with respect to the relation between color densities and temperatures. Such a wide hysteresis range ΔH cannot be realized when one or more aliphatic acid/alcohol esters obtained from aliphatic alcohols having even numbers of carbon atoms are employed. In addition, as the composition is enclosed or occluded in microcapsules and used in the form of encapsulated micro-granules, effective color-memorizing characteristics having a preferable hysteresis range ΔH from 8°C to 30°C can be obtained.

The manifestation of these excellent characteristics has not been fully explained, but the same characteristics and behavior of thermochromism, which will be shown in the measurement data below were repeatedly observed in the embodiments according to the present invention.

The preferred embodiments according to the present invention will be described below, wherein the present invention is not limited thereto.

First, the preparation of each embodiment of the microcapsuled pigment is described. And then the measuring method employed to measure hysteresis characteristics of said microcapsulated pigment with respect to temperature changes is described.

The amounts, ratios and percentages are by weight.

### [Preparation of Microcapsulated Pigment]

(A) 1.5 parts of 1.2-benz-6-diethylamino-fluoran serving as an electron-donating chromatic organic compound, (B) 5.0 parts of 2.2-bis(4'-hydroxyphenyl)-4-methylpentane as a phenol compound and (C) 50.0 parts of ester(s) as specified below were heated at 120°C to be in a homogeneous compatible state, and mixed with a solution of 10 parts of EPON828 (epoxy resin manufactured by Yuka Shell Epoxy K.K.) and 10 parts of methyl ethyl ketone. The resultant solution was added dropwise to 100 parts of a 10% aqueous solution of gelatin and agitation was performed so that fine droplets were formed. Further, an aqueous solution prepared by dissolving 5 parts of Curing Agent U (adduct compound obtained by adding amines to epoxy resin, manufactured by Yuka Shell Epoxy K.K.) in 45 parts of water was gradually added to the above mixture being agitated. The resultant mixture was further agitated at 80°C for about 5 hours to obtain a mixture containing microcapsulated pigment. This mixture was subjected to centrifugal separation to obtain microcapsulated pigment with a water content of 40%.

### [Measuring Method of Hysteresis Characteristics]

An ink was prepared by dispersing 40 parts of the microcapsulated pigment obtained above in 60 parts of emulsion of ethylene/vinyl acetate. The ink was printed on a sheet of woodfree paper with a screen printing machine. The printed sheet was heated and cooled as described below and the behavior of color change was plotted.

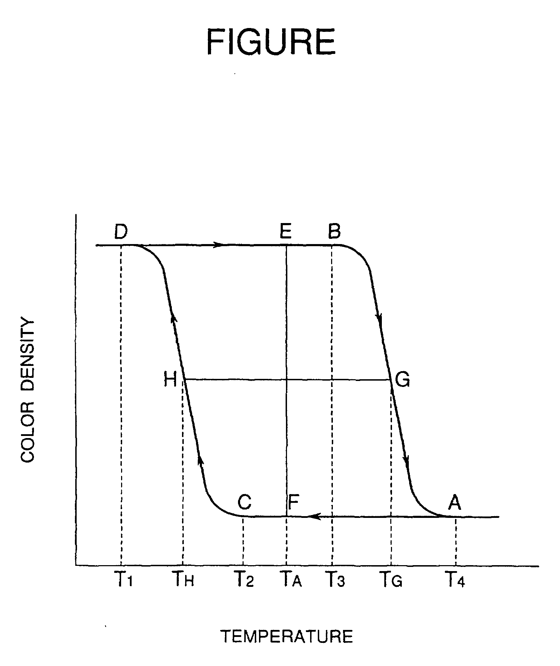

The printed paper was set at the proper position of a color-difference meter [color-difference meter TC-3600 manufactured by K.K. Tokyo Denshoku]. The printed sheet was heated and cooled, and heated again in a range of 50 centigrade degrees, wherein the heating/cooling was carried out at a rate of 10 centigrade degrees/min. For example, Embodiment 1 at its initial temperature of -20°C was heated up to 30°C at the rate of 10 centigrade degrees/min, and then cooled to -20°C at the same rate. Luminosity at various temperatures which was measured by the color-difference meter was plotted to obtain the relation between color densities (measured as luminosity) and temperatures, as is shown in Fig. 1. Thus, temperatures T₁, T₂, T₃, T₄, T_{H} (determined as the temperature at which 50% of the highest color density of the ink is observed during the coloring process), T_{G} (determined as the temperature at which 50% of the highest color density of the ink is observed during decolonizing process), and ΔH (the length of the segment HG). Table 1 shows the temperature-sensitive color change characteristics of the microcapsulated pigments employing esters of respective embodiments according to the present invention.

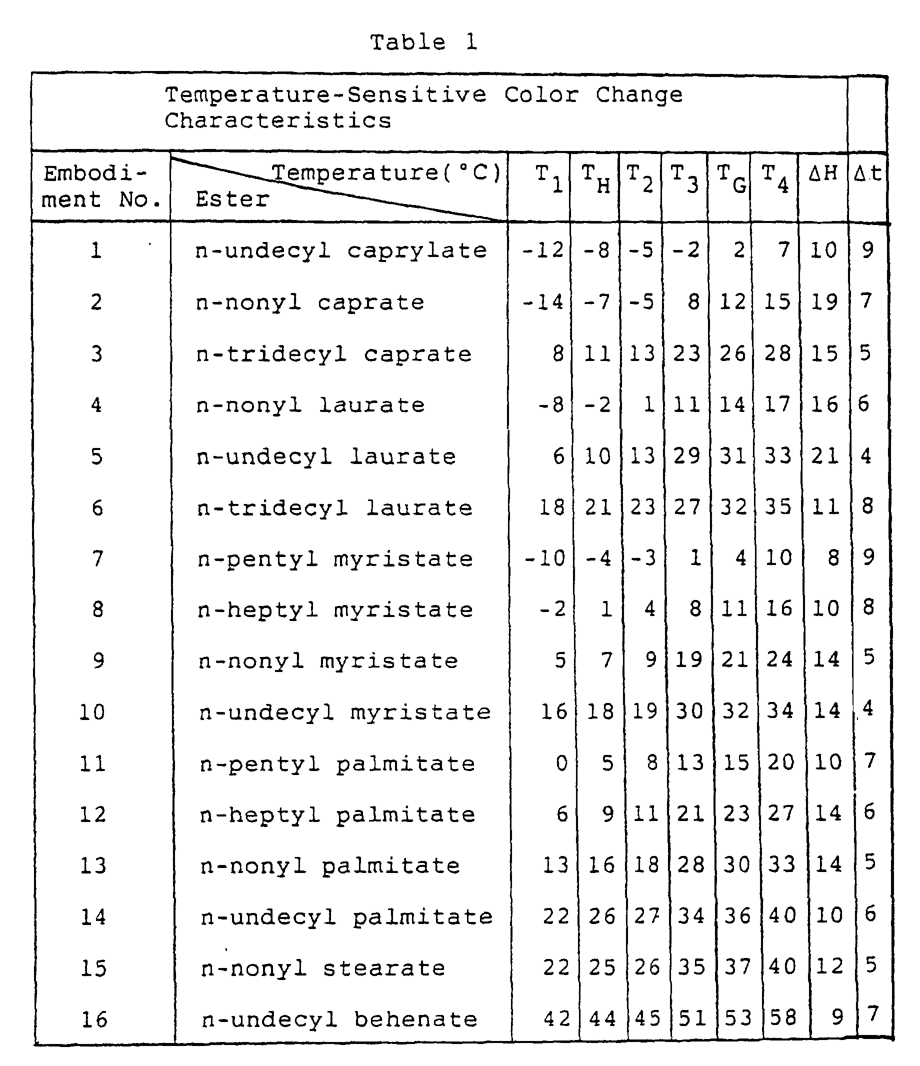

Microcapsulated pigments employing esters which were obtained by esterification of monohydric aliphatic alcohols having even numbers of carbon atoms and aliphatic carboxylic acids were prepared in the same manner as described above, and hysteresis ranges ΔH thereof were measured as described. The results are:
n-butyl stearate ; 1 centigrade degree
n-octyl stearate ; 7 centigrade degrees
n-decyl myristate ; 7 centigrade degrees
n-decyl palmitate ; 5 centigrade degrees
n-decyl stearate ; 5 centigrade degrees
n-lauryl stearate ; 2 centigrade degrees and
myristyl myristate; 6 centigrade degrees.

### [Application 1]

In the same manner as described above, a microcapsulated pigment [T₁=6°C and T₄=330°C] exhibiting reversible thermochromism of vermilion/colorless was prepared, wherein 2-chloro-3-methyl-6-diethylaminofluoran serving as the component (A), 2,2-bis(4'-hydroxyphenyl) propane as the component (B) and undecyl laurate as component (C) in a homogeneous compatible state were enclosed in microcapsules. 40 parts of the microcapsulated pigment was dispersed in 60 parts of emulsion of ethylene-vinyl acetate to prepare a printing ink. English words, for example, "DEVIL" and "ANGEL" were printed on a sheet of woodfree paper in said ink, while the corresponding Japanese translations "AKUMA" and "TENSHI" were printed near their respective corresponding English words on the same sheet in an ordinary ink (which is not temperature sensitive nor changes color). Similarly, other English words and corresponding Japanese translations were printed on the sheet. Thus, an English Word Exercise Sheet was made.

Both the English words and the Japanese translations could be read on the English Word Excercize Sheet. Then, the sheet was heated over 33°C, when the English words disappeared. This decolored state of the English words was maintained when the sheet was left at room temperature of about 25°C. In this case, only the Japanese words could be seen at room temperature. Next, the sheet was cooled below about 6°C, when the vermilion English words appeared. This colored state of the English words was maintained when the sheet was left at room temperature. The colored state and the decolored state of the English words could be alternately and repeatedly obtained and maintained at ambient temperatures, which is very useful to those who want to memorize English words.

### [Application 2]

(A) 1,3-dimethyl-6-diethylaminofluoran, (B) 2,2-bis(4'-hydroxyphenyl)-4-methylpentane and (C) n-nonyl stearate in a homogeneous compatible state were microcapsulated according to interfacial polymerization of epoxy resin and amine to obtain microcapsulated pigment having a mean diameter of 10 µm. The resultant microcapsulated pigment exhibited reversible thermochromism of orange/colorless [T₁=22°C and T₄=40°C].

5 parts of this microcapsulated pigment, 1 part of non-color-changing yellow pigment and 94 parts of polyethylene chips were fused and mixed at about 170°C to prepare chips exhibiting thermochromism.

Then, the chips were molded at about 150°C with a blow molding machine to obtain a plastic goldfish exhibiting thermochromism. This goldfish was orange in a temperature range from 25°C to 35°C, but turned yellow when put into hot water over 40°C. This yellow state was maintained when the goldfish was left in the temperature range from 25°C to 35°C. When cooled below 22°C, the goldfish turned orange. This orange state was maintained when the goldfish was left in the temperature range from 25°C to 35°C. The orange state and the yellow state were alternately and repeatedly maintained in the temperature range from 25 C to 35 C.

### [Application 3]

(A) 3-dibutylamino-6-methyl-7-anylinofluoran, (B) 1,1-bis(4'-hydroxyphenyl)-3-methylbutane and (C) undecyl myristate in a homogeneous compatible state were microcapsulated according to interfacial polymerization of epoxy resin and amine to obtain microcapsulated pigment having a mean diameter of 10 µm. The resultant microcopsulated pigment exhibited reversible thermochromism of black/colorless [T₁=16°C and T₄=34°C].

An ink was prepared by dispersing the microcapsulated pigment in emulsion of etylene-vinyl acetate. The ink was printed on woodfree white paper with a screen printing machine using a 180-mesh screen to prepare a recording sheet exhibiting thermochromism.

The resultant recording sheet was black at ambient temperatures, but turned white when heated over 34°C. This white state was maintained when the sheet was left at room temperature of about 25°C. Then, the sheet was cooled below about 16°C, when it turned black. This black state was maintained when the sheet was left at room temperature.

The black state and the white state of the recording sheet could be alternately and repeatedly obtained and maintained at ambient temperatures. On the recording sheet in the black state at room temperature, white images could be drawn with a heating type thermopen (generating heat of 45°C). On the other hand, on the recording sheet in the white state, black images could be drawn with a cooling type thermopen (of 3°C). In both cases, images could be maintained at room temperature.

The microcapulated pigment composition according to the present invention effectively exhibits reversible thermochromism of coloring/decoloring with a hysteresis range (ΔH) from 8°C to 30°C with respect to color-densities and temperatures. Both of the two states of thermochromism obtained at temperatures higher/lower than the color-change-causing temperature are alternately memorized and maintained at ambient temperatures. By heating or cooling the pigment, both of the two state, one at a time, can be reversibly obtained and maintained. In addition, as such thermochromism is derived from employing, as reaction medium of the color forming reactions, one or more aliphatic esters obtained from esterification of monohydric aliphatic alcohols having odd numbers of carbon atoms and aliphatic carboxylic acids having even number of carbon atoms, a wide hysteresis range ΔH and excellent color-memorizing effect can be realized. Accordingly the microcapsulated pigment according to the present invention is of great use in the practical fields of applications.

The microcapsulated pigment according to the present invention may be used for various kinds of painting and printing as paints and printing inks, or fused and mixed with thermoplastic resins and waxes to be used in various forms.

## Claims

1. A temperature-sensitive color-memorizing microcapsulated pigment composition prepared by combining into a homogeneous compatible state (A) an electron-donating chromatic organic compound, (B) an electron-accepting compound and (C) one or more esters employed to control color forming reactions and selected to realize the characteristics of reversible color change having a hysteresis range (ΔH) with respect to color densities and temperatures from 8 to 30°C and a color change sharpness defined as the difference (Δt) between the lowest temperature (T4) at which complete decoloration occurs and the highest temperature (T3) at which complete coloration can be maintained of 1 to 10°C, the ester component (C) being selected from (1) aliphatic acid/alcohol esters of monohydric aliphatic alcohols having odd numbers (not less than 9) of carbon atoms and aliphatic carboxylic acids having even numbers of carbon atoms, and (2) aliphatic acid/alcohol esters having 17 to 23 carbon atoms of aliphatic carboxylic acids having even numbers of carbon atoms and either n-pentyl alcohol or n-heptyl alcohol.

2. A temperature-sensitive color-memorizing microcapsulated pigment composition according to Claim 1, wherein the aliphatic acid/alcohol esters are aliphatic acid/alcohol esters having 17 to 37 carbon atoms obtained from esterification of n-nonyl alcohol, n-undecyl alcohol, n-tridecyl alcohol or n-pentadecyl alcohol.

## Revendications

1. Composition de pigment microencapsulé mémorisant une couleur, sensible à la température, que l'on prépare en combinant, dans un état compatible homogène, (A) un composé organique chromatique donneur d'électrons, (B) un composé accepteur d'électrons et (C) un ou plusieurs esters employés pour réguler les réactions de formation de la couleur, et choisi de manière à obtenir les caractéristiques de changement de couleur réversible présentant une gamme d'hystérésis (ΔH) en ce qui concerne les densités de couleur et les températures de 8 à 30°C, et une netteté de changement de couleur, définie par la différence (Δt) entre la température la plus basse (T₄) à laquelle se produit la décoloration complète et la température la plus élevée (T₃) à laquelle on peut maintenir la coloration complète, de 1 à 10°C, le constituant (C) étant choisi parmi (1) les esters d'acide/alcool aliphatiques obtenus à partir d'alcools monohydroxylés aliphatiques comportant un nombre impair (pas moins de 9) d'atomes de carbone et d'acides carboxyliques aliphatiques comportant un nombre pair d'atomes de carbone, et (2) les esters d'acide/alcool aliphatiques comportant 17 à 23 atomes de carbone, d'acides carboxyliques aliphatiques comportant un nombre pair d'atomes de carbone, et soit l'alcool n-pentylique, soit l'alcool n-heptylique.

2. Composition de pigment microencapsulé mémorisant une couleur, sensible à la température, selon la revendication 1, dans laquelle les esters d'acide/alcool aliphatiques sont des esters d'acide/alcool aliphatiques comportant 17 à 37 atomes de carbone, obtenus par estérification d'alcool n-nonylique, d'alcool n-undécylique, d'alcool n-tridécylique ou d'alcool n-pentadécylique.

## Patentansprüche

1. Temperaturempfindliche, farbspeichernde, mikroverkapselte Pigmentzusammensetzung, präpariert durch Vereinigung in einen homogenen, kompatiblen Zustand von
(A) einer elektronenabgebenden chromatischen, organischen Verbindung,
(B) einer elektronenaufnehmenden Verbindung und
(C) einem oder mehreren Estern, die zur Steuerung der farbgebenden Reaktionen eingesetzt und so gewählt sind, daß die Eigenschaften einer reversiblen Farbänderung mit einem Hysteresebereich (ΔH) bezüglich Farbdichten und Temperaturen von 8 bis 30°C und einer Farbänderungsschärfe von 1 bis 10°C, definiert als die Differenz (Δt) zwischen der niedrigsten Temperatur (T₄), bei der komplette Entfärbung auftritt, und der höchsten Temperatur (T₃), bei der komplette Färbung beibehalten werden kann, realisiert werden, wobei die Esterkomponente (C) ausgewählt ist aus
(1) aliphatischen Säure-/Alkoholestern aus einwertigen aliphatischen Alkoholen mit einer ungeraden Anzahl (nicht weniger als 9) Kohlenstoffatome, und aliphatischen Carbonsäuren mit einer geraden Anzahl Kohlenstoffatome, und
(2) aliphatischen Säure-/Alkoholestern mit 17 bis 23 Kohlenstoffatomen aus aliphatischen Carbonsäuren mit einer geraden Anzahl Kohlenstoffatome und entweder n-Pentylalkohol oder n-Heptylalkohol.

2. Temperaturempfindliche, farbspeichernde, mikroverkapselte Pigmentzusammensetzung nach Anspruch 1, worin die aliphatischen Säure-/Alkoholester solche mit 17 bis 37 Kohlenstoffatomen sind, die sich aus der Veresterung von n-Nonylalkohol, n-Undecylalkohol, n-Tridecylalkohol oder n-Pentadecylalkohol ergeben.
